Europäisches Patentamt

European Patent Office

Office européen des brevets

(19)

(11) EP 0 927 350 B1

(12) FASCICULE DE BREVET EUROPEEN

(45) Date de publication et mention
de la délivrance du brevet:
**20.08.2003 Bulletin 2003/34**

(21) Numéro de dépôt: **97919098.0**

(22) Date de dépôt: **15.09.1997**

(51) Int Cl.⁷: **G01N 25/68**

(86) Numéro de dépôt international:
**PCT/FR97/01623**

(87) Numéro de publication internationale:
**WO 98/012546 (26.03.1998 Gazette 1998/12)**

(54) **PROCEDE ET DISPOSITIF DE CARACTERISATION D'UNE MODIFICATION AU COURS DU TEMPS DE L'ETAT DE CONDENSATION DE GOUTTELETTES SUR UNE CIBLE**

VERFAHREN UND VORRICHTUNG ZUR CHARAKTERISIERUNG DER ZEITLICHEN ÄNDERUNG DER KONDENSATION VON TRÖPFCHEN AUF EINER SCHEIBE

METHOD AND DEVICE FOR CHARACTERISING A MODIFICATION IN TIME OF THE STATE OF CONDENSATION OF DROPLETS ON A TARGET

(84) Etats contractants désignés:
**DE FR GB IT**

(30) Priorité: **17.09.1996 FR 9611310**

(43) Date de publication de la demande:
**07.07.1999 Bulletin 1999/27**

(73) Titulaire: **COMMISSARIAT A L'ENERGIE
ATOMIQUE
75015 Paris (FR)**

(72) Inventeurs:
• **BEYSENS, Daniel
F-38120 Saint-Egrève (FR)**
• **MARCOS-MARTIN, Maria
F-75014 Paris (FR)**
• **NIKOLAYEV, Vadim
F-38000 Grenoble (FR)**
• **SIBILLE, Patrick
F-75014 Paris (FR)**

(74) Mandataire: **Poulin, Gérard et al
BREVALEX
3, rue du docteur Lancereaux
75008 Paris (FR)**

(56) Documents cités:
**EP-A- 0 409 546          WO-A-92/18854
DE-A- 2 404 006**

• **SHIGEAKI MATSUMOTO ET AL:
"DETERMINATION OF THE DEW POINT USING
LASER LIGHT AND A ROUGH SURFACE"
OPTICS COMMUNICATIONS, vol. 91, no. 1 / 02, 1
juillet 1992, pages 5-8, XP000278055 cité dans la
demande**
• **JACHOWICZ R S ET AL: "HYGROMETER WITH
FIBRE OPTIC DEW POINT DETECTOR"
SENSORS AND ACTUATORS A, vol. A42, no.
1/03, 15 avril 1994, pages 503-507, XP000449970**

## Description

## DOMAINE TECHNIQUE

La présente invention concerne un procédé et un dispositif de caractérisation d'une modification au cours du temps de l'état de condensation de gouttelettes d'un liquide sur une cible.

Le procédé et le dispositif de l'invention permettent notamment de mesurer la condensation ou l'évaporation de gouttelettes sur la cible. Ils permettent aussi de mesurer des paramètres qui gouvernent la condensation des gouttelettes.

Les domaines d'application de l'invention sont très variés. A titre d'exemple, l'invention peut être mise à profit dans le domaine de la biologie pour vérifier l'état de stérilisation d'une surface par la mesure de la condensation d'un germicide. Elle permet en effet de déterminer si le germicide est présent pendant un temps suffisant et en quantité suffisante sur une surface pour la stériliser.

L'invention peut aussi être utilisée dans le domaine de la météorologie, pour mesurer, par exemple, les caractéristiques de la rosée. Elle peut servir aussi a déterminer l'opportunité d'un traitement préventif de certains végétaux sujets à des maladies cryptogamiques dues à la présence de rosée.

L'invention peut encore être mise à profit pour la mesure de la condensation d'eau dans le sable des dunes.

## ÉTAT DE LA TECHNIQUE

Pour caractériser l'état de condensation de gouttelettes de liquide sur une cible on utilise essentiellement à l'heure actuelle deux paramètres qui sont la mesure de la température de rosée et la mesure de la masse de liquide condensée.

On connaît en effet un certain nombre de capteurs optiques aptes à déterminer pour une cible la température de rosée, et partant, la tension de vapeur environnante. On peut se reporter à ce sujet au document (1) dont la référence est mentionnée à la fin de la présente description.

Le principe de détermination de la température de rosée pour un produit donné, repose sur la mesure de la réflexion ou de la transmission d'un faisceau lumineux par un substrat-cible plan dont on abaisse la température. Lorsqu'une température, dite température de rosée, est atteinte par le substrat, il se produit une condensation de gouttelettes du produit sur la cible. La réflexion ou la transmission du faisceau lumineux devient alors quasi nulle.

On peut noter que la température mesurée à laquelle se produit le phénomène de condensation (rosée), est cependant toujours supérieure à la température de rosée qui correspond à une condensation homogène. Ce décalage provient du fait que l'angle de contact des gouttelettes de condensation sur la surface de la cible n'est jamais égal à 180°.

On connait également des appareils de mesure de la température de rosée dans lesquels la cible est conçue de telle façon que la réflexion d'un faisceau lumineux y est quasi-nulle en l'absence de condensation de gouttelettes.

La température de rosée est alors déterminée en abaissant la température de la cible et en mesurant celle-ci lorsque la réflexion du faisceau lumineux passe de zéro à une valeur non nulle en raison de la formation d'un film de liquide condensé.

On peut se reporter à ce sujet au document (2) dont la référence est indiquée à la fin de la description.

La deuxième méthode connue pour déterminer l'état de la condensation consiste à mesurer la masse du liquide condensé. Cette méthode, comme décrite dans le document (3) dont la référence est indiquée à la fin de la description, est couramment utilisée en agrométéorologie. Conformément à cette méthode, un substrat, cible de condensation, est pesé avant, pendant et après la condensation.

Selon une variante, il est également connu de prélever une partie du liquide condensé avec du papier absorbant, et de peser ce papier.

Les techniques exposées ci-dessus ne sont pas d'une mise en oeuvre aisée et ne permettent d'avoir que peu d'informations sur la condensation se formant sur une cible.

En effet, comme le montre le document (4), dont la référence est indiquée à la fin de la présente description, les gouttelettes formées par condensation peuvent être caractérisées par d'autres grandeurs et notamment par leur angle de contact avec la surface de la cible.

## EXPOSÉ DE L'INVENTION

L'invention a pour but de proposer un procédé et un dispositif pour déterminer l'état de condensation d'un liquide sur une cible ne présentant pas les limitations des méthodes décrites précédemment et permettant d'établir, si nécessaire, un grand nombre de paramètres caractérisant l'état de condensation.

Additionnellement, un but de l'invention est de proposer un dispositif permettant de simuler la condensation sur une cible artificielle pour y mesurer les caractéristiques de l'état de condensation.

Pour atteindre ces -buts, l'invention a plus précisément pour objet un procédé de caractérisation d'une modification au cours du temps de l'état de condensation de gouttelettes d'un liquide sur une cible. Cette modification peut concerner aussi bien une condensation qu'une évaporation. Conformément au procédé de l'invention, on dirige sur la cible un faisceau de lumière, on mesure au cours du temps (t) une intensité I(t) d'un faisceau transmis à travers la cible ou d'un faisceau réfléchi à partir de la cible et on enregistre une fonction temporelle a(t) définie par

$$a(t) = \frac{I(t)}{I_i}$$

où $I_i$ est une intensité du faisceau transmis, respectivement du faisceau réfléchi, mesurée en l'absence de gouttelettes sur la cible, et on détermine, à partir de la fonction a(t), et plus précisément de sa forme temporelle, au moins une caractéristique géométrique de l'état de condensation.

Selon un aspect particulier de l'invention, il est possible de déterminer une caractéristique de l'état de condensation à partir d'au moins une donnée choisie parmi :

- une valeur du temps (t) de la fonction a(t),
- une valeur de lissage au temps (t) de la fonction a(t), notée $\bar{a}$(t),
- une valeur asymptotique de la fonction a(t), notée $\bar{a}\infty$,
- la valeur d'un premier maximum local de la fonction a(t) notée $a_M(1)$,
- une valeur de lissage de la fonction a(t) à un temps (t) correspondant au premier maximum local de la fonction a(t), et notée $\bar{a}_M(1)$.

.Au sens de l'invention, on entend par valeur de lissage de la fonction a(t) la valeur au temps t d'une fonction monotone $\bar{a}$(t) la plus proche possible de la fonction a(t).

Selon un mode de réalisation qui ne fait pas partie de l'invention, la caractéristique de l'état de condensation que l'on établit peut être la présence, respectivement l'absence, de gouttelettes. Cette caractéristique est déterminée par les critères suivants :

a(t)=1 pour l'absence de gouttelettes
et a(t)<1 pour la présence de gouttelettes.

En effet, lorsque a(t)=1 à un instant t donné, on vérifie I(t)=$I_i$ c'est-à-dire que la cible est dans un état dans lequel sa surface est dépourvue de gouttelettes de condensation.

Dès que des gouttelettes apparaissent le faisceau lumineux transmis ou réfléchi est atténué du fait d'une dispersion de la lumière traversant les gouttelettes. On vérifie alors I(t)<$I_i$ et, partant, a(t) <1.

Selon l'invention, on détermine une caractéristique géométrique de l'état de condensation. On entend par caractéristique géométrique toute caractéristique liée à la forme et la taille des gouttelettes, ainsi que leur disposition sur la cible.

Parmi les caractéristiques géométriques, on peut citer la proportion de surface occupée par les gouttelettes sur la cible, l'angle de contact des gouttelettes, leur polydispersité, leur rayon, leur volume, etc.

A titre d'exemple, la caractéristique de l'état de condensation que l'on établit peut être la proportion au temps t de la surface occupée par les gouttelettes, ladite proportion de la surface, notée $\varepsilon^2$(t) étant définie par la formule :

$$\varepsilon^2(t) = 1 - \sqrt{\bar{a}(t)}.$$

Selon un autre exemple, le rayon moyen <R> des gouttelettes peut être déterminé pour au moins l'un des premier minimum local, deuxième minimum local et premier maximum local de la fonction a(t), <R> étant défini par

* <R>=$\lambda$F à un premier minimum de la fonction a(t)
* <R>=2$\lambda$F au premier maximum de la fonction a(t)
* <R>=3$\lambda$F à un deuxième minimum de la fonction a(t)

où $\lambda$ est la longueur d'onde du faisceau de lumière incident et où F est défini par

$$F = 15 \exp\left(-\frac{\theta}{45}\right) \ .$$

La valeur $\theta$ est comprise comme l'angle de contact moyen (en degrés) des gouttelettes sur la cible.

En tenant compte d'un facteur géométrique f($\theta$) qui relie le volume d'une gouttelette à son rayon, il est aussi possible de calculer au temps (t) le volume v(t) de liquide condensé par unité de surface de la cible.

Ce volume v(t) est donné par la formule suivante :

$$v(t) = \frac{f(\theta) <R>}{\pi} \, \varepsilon^2(t) \ .$$

Selon une mise en oeuvre particulière du procédé de l'invention, l'angle $\theta$, exprimé en degrés peut être établi conformément à la formule suivante :

$$\theta = 200. \sqrt{\bar{a}\infty} \ .$$

Selon une autre mise en oeuvre particulière de l'invention, la caractéristique de l'état de condensation que l'on établit est la polydispersité des gouttelettes, notée g et définie par :

$$g = 1,25. \left(0,3 - \frac{\delta}{5}\right)$$

et où

$$\delta = \frac{a_M(1) - \bar{a}_M(1)}{\bar{a}_M(1)}$$

Les valeurs $a_M(1)$ et $\bar{a}_M(1)$ sont respectivement les valeurs des courbes $a(t)$ et $\bar{a}(t)$ à l'instant du premier maximum local de la courbe $a(t)$.

Au sens de la présente invention, on entend par polydispersité des gouttelettes la distribution de leur rayon autour du rayon moyen.

La polydispersité est définie par

$$g = \Sigma \frac{(R^2 - <R>^2)^{\frac{1}{2}}}{<R>}$$

où R est le rayon d'une gouttelette individuelle, <R> le rayon moyen des gouttelettes défini par

$$<R> = \frac{\Sigma R^2}{\Sigma R}$$

et $\Sigma$ un signe somme symbolisant la somme sur toutes les gouttelettes de la cible.

La présente invention a également pour objet un dispositif pour la caractérisation d'une modification de l'état de condensation de gouttelettes de liquide sur une cible. Ce dispositif comporte :

- des moyens émetteurs de lumière aptes à diriger sur la cible un faisceau de lumière monochromatique,
- un photodétecteur apte à mesurer l'intensité d'un faisceau réfléchi à partir de la cible ou d'un faisceau transmis à travers la cible, et à émettre un signal de mesure,
- une unité de traitement du signal de mesure reliée au photodétecteur et apte à enregistrer une fonction temporelle $a(t)$ définie par

$$a(t) = \frac{I(t)}{I_i}$$

où $I_i$ est l'intensité du faisceau réfléchi, respectivement transmis, mesuré en l'absence de gouttelettes sur la cible. L'unité de traitement est en outre arrangée pour déterminer, à partir de la fonction $a(t)$ au moins une caractéristique géométrique de l'état de condensation des gouttelettes.

Selon un aspect particulier de l'invention, le dispositif peut aussi comporter une sonde thermique pour mesurer la température de la cible. La sonde thermique est reliée à l'unité de calcul pour déterminer un point de rosée lors de la condensation de gouttelettes sur la cible.

Grâce à cet aspect de l'invention, la température de rosée peut être additionnellement déterminée de la façon connue et décrite dans la partie d'introduction de la description.

Selon une réalisation particulière du dispositif de l'invention, les moyens émetteurs de lumière peuvent comporter :

- une source de lumière monochromatique,
- une tête de détection pour collimater le faisceau de lumière incident sur la cible et pour recevoir un faisceau réfléchi,
- une liaison par fibre optique reliant la tête de détection à la source de lumière et au photodétecteur.

Selon un perfectionnement de l'invention, la tête de détection peut être équipé de moyens de régulation de température. Ces moyens comportent par exemple un thermocouple apte à mesurer la température de la tête de détection et une résistance chauffante commandée en fonction de la température de la tête et en fonction de celle de la cible, de façon à maintenir la température de la tête de détection à une valeur légèrement supérieure à celle de la cible. On évite ainsi une condensation des gouttelettes de liquide sur la tête de détection.

D'autres caractéristiques et avantages de l'invention ressortiront de la description qui suit, en référence aux dessins des figures annexées, donnée à titre purement illustratif et non limitatif.

## BRÈVE DESCRIPTION DES FIGURES

La figure 1 est un schéma de principe d'un dispositif conforme à l'invention fonctionnant en mode de réflexion.

La figue 2 est un schéma de principe d'un dispositif conforme à l'invention, fonctionnant en mode de transmission.

La figue 3 est un schéma correspondant à une réalisation particulière du dispositif de l'invention fonctionnant en mode de réflexion.

La figure 4 est un schéma a plus grande échelle d'une cible de mesure d'un détecteur conforme à l'invention.

La figure 5 est un graphique montrant des courbes de fonctions $a(t)$ et $\bar{a}(t)$ au cours du temps, représentatives de l'état de condensation de gouttelettes sur la cible.

La figure 6 est une abaque reliant la valeur a de la fonction $a(t)$ au rayon de gouttelettes formées lors d'une condensation, et pour différentes valeurs de la polydispersité des gouttelettes.

La figure 7 est une abaque reliant la valeur a de la fonction a(t) au rayon moyen des gouttelettes pour différentes valeurs de la fraction de la surface de la cible occupée par des gouttelettes.

## DESCRIPTION DÉTAILLÉE DE MODES DE MISE EN OEUVRE DE L'INVENTION

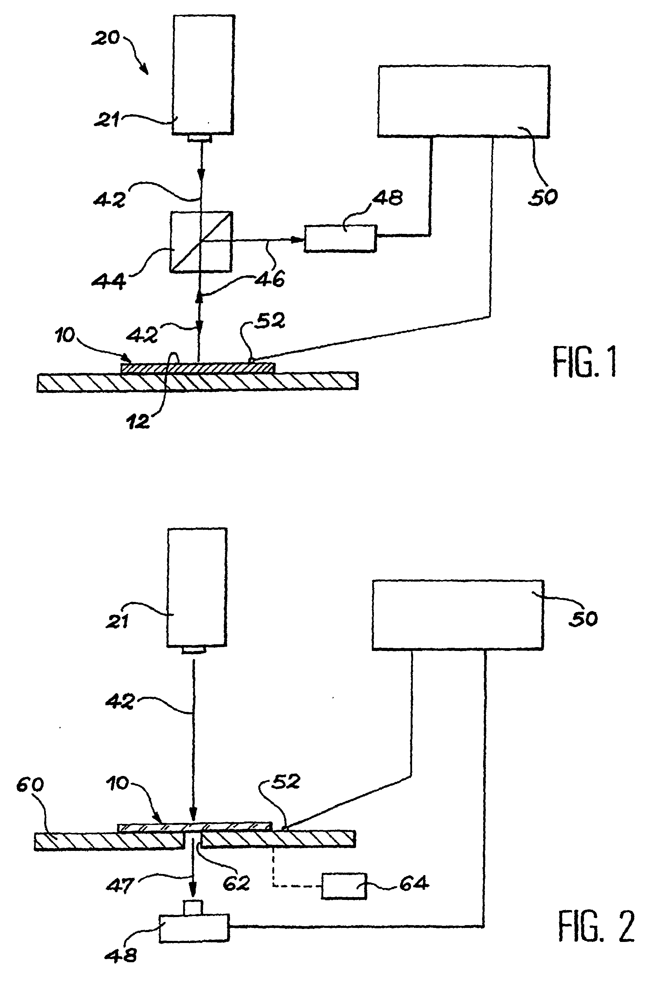

La figure 1 montre les principaux éléments d'un dispositif conforme à l'invention pour déterminer l'état de condensation d'un liquide sur une cible 10.

La cible 10 présente une surface supérieure 12 réfléchissante sur laquelle on veut mesurer et déterminer les caractéristiques de gouttelettes de condensation du liquide.

De façon avantageuse, lorsqu'on veut effectuer des mesures sur un support dont la surface n'est pas réflectrice de la lumière, on peut substituer à ce support une cible réfléchissante qui présente une caractéristique de mouillage identique à celle du support. La cible est alors portée à la même température que le support.

Le dispositif de la figure 1, adapté à effectuer des mesures sur une cible réfléchissante comprend des moyens émetteurs de lumière 20. Ces moyens sont équipés, par exemple, d'un laser 21 de type He-Ne d'une puissance de 1 à 5 mW et d'une longueur d'onde λ de 0,6328 μm, apte à émettre un faisceau de lumière monochromatique 42 dirigé de façon perpendiculaire sur la cible 10.

Le faisceau 42, appelé encore faisceau incident, traverse un cube réflecteur semi-transparent 44 avant d'atteindre la cible. Le cube 44 est transparent pour le faisceau 42 qu'il laisse passer. Il est par contre conçu pour dévier un faisceau 46, réfléchi par la cible, vers un photodétecteur 48.

En raison de l'incidence normale du faisceau incident 42 sur la cible dans le cas de la figure décrite, celui-ci est sensiblement confondu avec le faisceau réfléchi sur une portion de chemin optique comprise entre le cube réflecteur 44 et la cible 12.

Le photodétecteur 48 comprend, par exemple, une photodiode apte à émettre un signal électrique de mesure fonction de l'intensité du faisceau réfléchi qui l'atteint. Le photodétecteur est relié a une unité 50 de traitement du signal électrique de mesure. L'unité 50 est par exemple un micro-ordinateur fonctionnant selon un logiciel programmé.

Comme indiqué précédemment, l'unité de traitement 50 est apte à enregistrer une fonction a(t) définie par

$$a(t) = \frac{I(t)}{I_i}$$

où I(t) et $I_i$ sont respectivement l'intensité du faisceau atteignant le photodétecteur au temps (t) et l'intensité du faisceau atteignant le photodétecteur en l'absence de gouttelettes sur la cible.

L'unité de traitement permet également de calculer à partir de la fonction a(t) les grandeurs caractéristiques de l'état de condensation selon les formules indiquées précédemment.

Une sonde thermique, sous la forme d'un thermocouple 52, est ménagée sur la cible et est reliée à l'unité de traitement de signal. Grâce à la sonde thermique il est possible de façon classique de déterminer également la température de rosée, c'est-à-dire la température à partir de laquelle la condensation se produit. Le début de la condensation est repéré par la détection d'une modification de l'intensité du rayon réfléchi.

La figure 2 montre de façon schématique une variante du dispositif de la figure 1, adaptée à effectuer des mesures en transmission sur une cible sensiblement transparente.

Des parties de la figure 2 identiques ou similaires à celles de la figure 1 portent les mêmes références. Il est ainsi possible de se reporter à la description qui précède.

Dans le dispositif de la figure 2 le laser 21, formant une source de lumière, envoie directement sur la cible 10 un faisceau incident 42 de lumière monochromatique.

La cible 10 repose sur un support 60 qui présente une ouverture 62 par laquelle passe le faisceau transmis à travers la cible 10. Ce faisceau est repéré avec la référence 47. Le faisceau 47 est intercepté par un photodétecteur 48 qui en mesure l'intensité.

Le photodétecteur 48, de même qu'une sonde thermique 52 sont reliés à l'unité de traitement du signal 50. On peut noter que la sonde 52 n'est pas fixée directement sur la cible mais sur le support 60 qui est en contact thermique avec la cible 10 et sensiblement à la même température que celle-ci.

Selon un aspect particulier, illustré de façon très schématique sur la figure 2, des moyens 64 de régulation de la température de la cible peuvent être prévus. Il s'agit, par exemple, d'un module refroidisseur du type à effet Peltier en contact thermique avec le support 62.

On peut noter que des moyens de régulation similaires peuvent également être prévus pour le dispositif fonctionnant avec une cible réfléchissante, comme représenté à la figure 1.

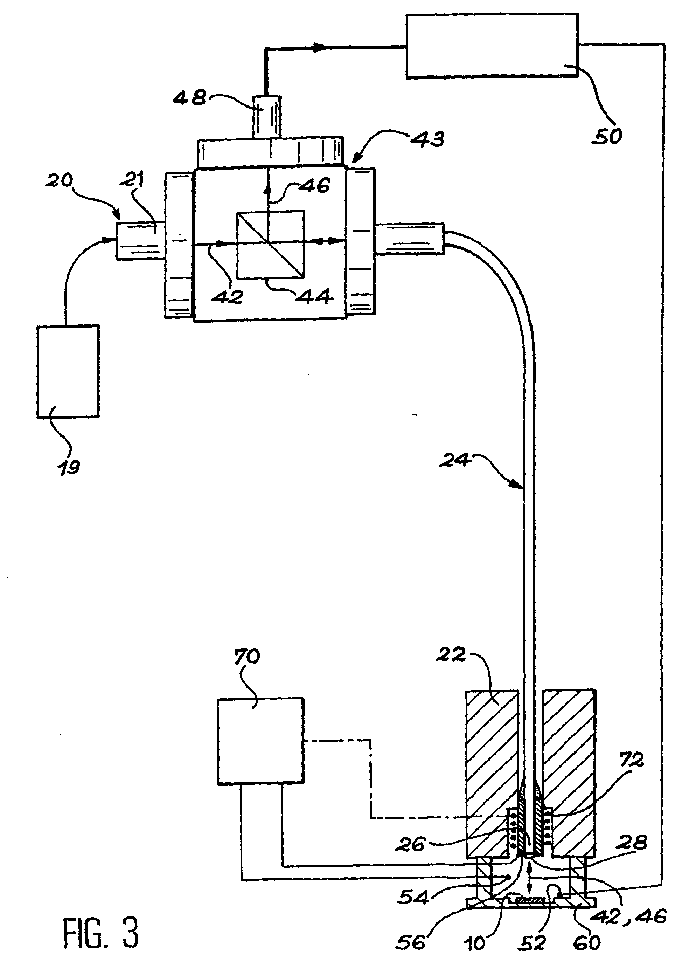

La figure 3 montre une réalisation particulière du dispositif de la figure 1.

Dans la réalisation de la figure 3 les moyens émetteurs de lumière comportent différentes parties disposées de part et d'autre d'un répartiteur optique 43. Le répartiteur optique est équipé d'un cube réflecteur semi-transparent 44.

Les moyens émetteurs de lumière comportent une diode laser 21 reliée à une alimentation électrique 19 disposée sur un premier côté du répartiteur 43 et apte à émettre le faisceau incident 42. Les moyens émetteurs de lumière 20 comportent également une tête de détection 22 reliée à un deuxième côté du répartiteur optique 43, opposé au premier côté, par l'intermédiaire d'une fibre optique 24. Le cube 44 est conçu pour laisser passer le faisceau incident en provenance de la diode laser vers la fibre optique et pour dévier un faisceau en provenance de la tête de détection.

Une extrémité 26 de la fibre optique débouche à l'intérieur de la tête de détection 22 sur une lentille 28 de focalisation permettant d'envoyer un faisceau incident collimaté 42 sur la cible 10. La cible 10 est disposée sur un support 60 de la tête de détection, spécialement prévu à cet effet.

La lentille 28 permet également de collecter un faisceau réfléchi par la cible 10 pour le diriger dans la fibre optique. Ainsi la fibre optique permet de transmettre sans pertes le faisceau de lumière incidente et le faisceau de lumière réfléchi 46 entre la lentille 28 et le répartiteur optique.

On peut noter que dans le répartiteur 43, le faisceau réfléchi 46 est dévié, par le cube 44, vers un photodétecteur 48 disposé sur une troisième face du répartiteur 43.

Le dispositif de la figure 3 comprend aussi plusieurs sondes thermiques à thermocouple. Comme sur les figures précédentes, une première sonde 52 est prévue pour mesurer la température de la cible 10. Cette sonde 52, de même que le photodétecteur 48, est reliée à l'unité de traitement du signal 50.

Deux autres sondes thermiques 54, 56 sont respectivement prévues pour mesurer la température (Tr) de l'atmosphère à faible distance de la cible et la température (Tf) de l'extrémité 26 de la fibre optique. La température (Tr) est mesurée, par exemple, à 5 mm de la cible.

Les sondes thermiques 54 et 56 sont reliées électriquement à un système de régulation de température 70. Le système de régulation de température 70 permet de contrôler l'alimentation en courant électrique d'un fil chauffant 72 qui entoure l'extrémité 26 de la fibre optique.

L'alimentation du fil chauffant est régulée de telle façon que les températures (Tr) de l'atmosphère et (Tf) de l'extrémité de la fibre optique soient sensiblement égales.

Les températures Tr et Tf peuvent également être enregistrées, par exemple par l'unité 50 de traitement de signal, pour mesurer la température du point de rosée et la pression de saturation autour de la cible.

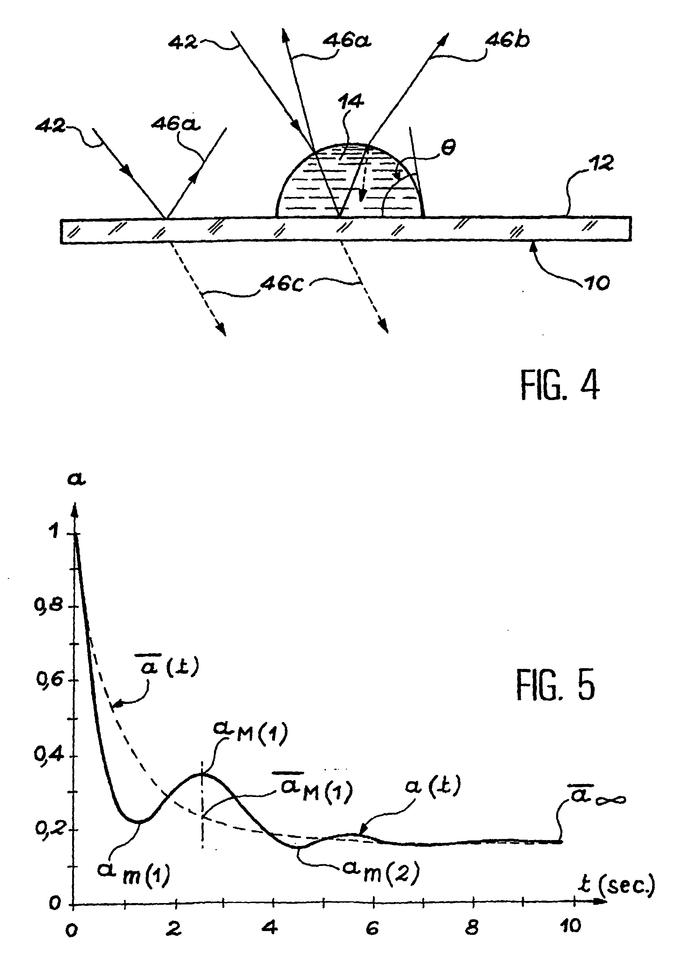

La figure 4 montre, à une échelle très agrandie une cible 10. La surface 12 de la cible 10 est représentée avec une gouttelette 14 d'un liquide condensé. La cible 10 est de préférence un miroir sous la forme d'une lamelle de silicium monocristallin oxydé et recouverte de silane. Suivant le traitement de sa surface 12, l'angle θ de contact de la gouttelette peut varier de 10° à 100° environ. Cet angle est ajusté de façon à simuler un support donné de mouillabilité donnée.

La figure montre un faisceau incident 42 atteignant la cible dans une région dépourvue de gouttelettes et un faisceau 42 atteignant la gouttelette 14. Les faisceaux réfléchis sont représentés respectivement avec les références 46a et 46b. A titre indicatif, la figure montre également les faisceaux 46c qui seraient transmis dans le cas d'une cible transparente.

Dans le cas de la figure 4 l'angle d'incidence du faisceau incident est représenté différent de 90° pour montrer de façon plus claire les rayons réfléchis. Cependant, dans le procédé et les dispositifs de l'invention, l'angle d'incidence est ajusté préférentiellement mais non obligatoirement à 90°. Dans ce cas le faisceau incident et les faisceaux réfléchis sont géométriquement confondus.

Le graphique de la figure 5 indique en ordonnée la valeur normalisée a de la fonction a(t) et de la fonction a(t) lissée, indiquée $\bar{a}$(t). Le temps est indiqué en abscisse et compté en secondes.

Sur le graphique on constate que la courbe a(t) présente un premier minimum local, un premier maximum local et un deuxième minimum local pour lesquelles les valeurs de la fonction a(t) sont respectivement $a_m(1)$, $a_M(1)$ et $a_m(2)$. La courbe présente d'autres extremums locaux plus difficilement discernables. La valeur asymptotique des fonctions a(t) et $\bar{a}$(t) est notée $\bar{a}\infty$.

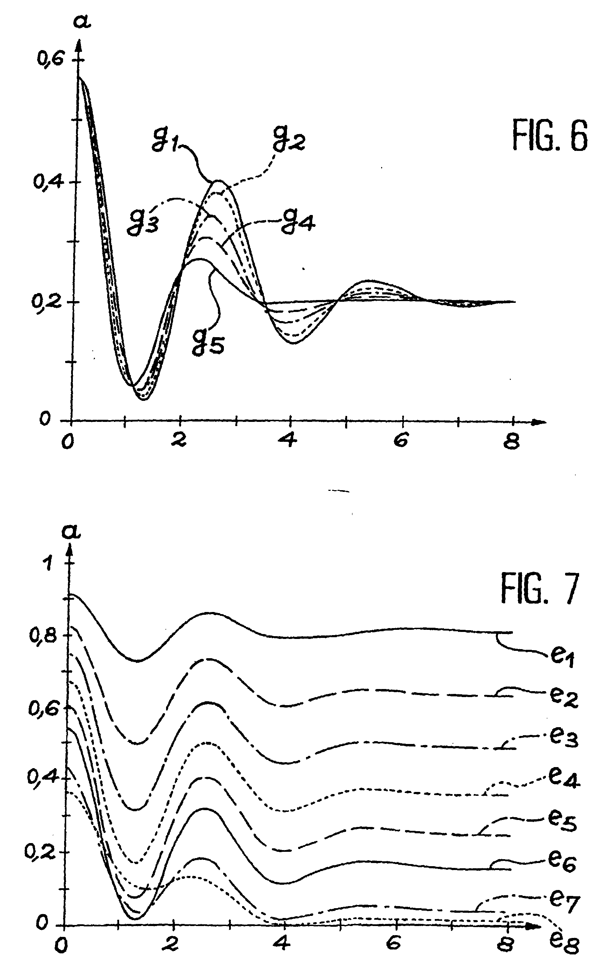

Les valeurs $\bar{a}\infty$, $a_m(1)$ et $a_M(1)$ sont utilisées notamment pour calculer la valeur de l'angle de contact, du rayon moyen et de la polydispersité des gouttelettes. Les formules de calcul indiquées précédemment ne sont pas répétées ici. Les caractéristiques de l'état de condensation peuvent être établies non seulement par calcul mais aussi à partir de tableaux de valeurs ou encore d'abaquer telles que représentées aux figures 6 et 7.

La figure 6 est une abaque reliant à la valeur a de la fonction a(t) le rayon moyen des gouttelettes pour différentes valeurs de la polydispersité g. Sur la figure 6, plusieurs courbes, référencées g1, g2, g3, g4 et g5 correspondent respectivement à une polydispersité égale à 0,14; 0,16; 0,20; 0,24 et 0,30.

La valeur de a est donnée en ordonnée tandis que le rayon moyen des gouttelettes est indiqué en abscisse. Le rayon moyen est indiqué en unités de longueur d'onde.

La figure 6 correspond à une condensation de gouttelettes avec un angle de contact moyen θ=104° pour une proportion de la surface de la cible occupée par les gouttelettes $\varepsilon^2$ telle que $\varepsilon^2$=0,55.

La figure 7 est une abaque reliant à la valeur a de la fonction a(t) le rayon moyen des gouttelettes pour différentes valeurs de la proportion $\varepsilon^2$ de la surface de la cible occupée par les gouttelettes.

Comme pour la figure 6, les valeurs de a sont indiquées en ordonnée et le rayon des gouttelettes, en unité de longueur d'onde, est indiqué en abscisse.

La figure 7 correspond à une condensation de gouttelettes avec un angle de contact moyen θ=104° et avec une polydispersité g=0,18. Sur cette figure plusieurs courbes référencées e1, e2, ... e8 correspondent respectivement à des valeurs de la proportion $\varepsilon^2$ de la surface occupée par des gouttelettes égale à 0,1; 0,2; 0,3; 0,4; 0,5; 0,6; 0,8 et 0,9.

## Documents cités.

(1) B. Cretinon, L. Morin et Y.P. YU, Exploitation statistique des résultats d'étalonnage des hygromètres à condensation à détection. Bulletin du BNM, 89 14 (1992); R.F. Pragnell, The modern condensation dew point hygrometer. Measurement + control 22, 74 (1989)

(2) S. Matsumoto and S. Toyooka, Determination of the dew point using laser light and a rough surface. Opt. Comm. 91, 5 (1992)

(3) J-P. L'Homme and O.F. Kimenez, Estimation of the dew duration on banana and plantain leaves from standard meteorological observations Agric. Forest. Meteorol. 62, 263 (1992)

(4) H. Zhao and D. Beysens, From droplet growth to film growth on a heterogeneous surface : condensation associated with a wettability gradient. Langmuir 11, 627 (1995).

## Revendications

1. Procédé de caractérisation d'une modification au cours du temps de l'état de condensation de gouttelettes d'un liquide sur une cible (10), **caractérisé en ce qu'**on dirige sur la cible (10) un faisceau (42) de lumière, on mesure au cours du temps (t) une intensité I(t) d'un faisceau transmis (47) à travers la cible ou d'un faisceau réfléchi (46) à partir de la cible et on enregistre une fonction temporelle a(t) définie par

$$a(t) = \frac{I(t)}{I_i}$$

où $I_i$ est une intensité du faisceau de transmission, respectivement de réflexion mesuré en l'absence de gouttelettes sur la cible, et on analyse une forme temporelle de la fonction a(t) pour déterminer au moins une caractéristique géométrique de l'état de condensation.

2. Procédé selon la revendication 1, **caractérisé en ce qu'**on détermine une caractéristique de l'état de condensation à partir d'au moins une donnée choisie parmi :

- une valeur du temps (t) de la fonction a(t),
- une valeur de lissage au temps (t) de la fonction a(t), notée $\bar{a}$(t),
- une valeur asymptotique de la fonction a(t), notée $\bar{a}\infty$,
- la valeur d'un premier maximum local de la fonction a(t) notée $a_M(1)$,
- une valeur de lissage de la fonction a(t) à un temps (t) correspondant au premier maximum local de la fonction a(t), et notée $\bar{a}_M(1)$.

3. Procédé selon la revendication 2, **caractérisé en ce que** l'éclairement est réalisé en lumière cohérente et **en ce que** la caractéristique de l'état de condensation est une proportion au temps (t) de la surface occupée par les gouttelettes, ladite proportion de la surface, notée $\varepsilon^2$(t) étant définie par la formule :

$$\varepsilon^2(t) = 1 - \sqrt{\bar{a}(t)}$$

4. Procédé selon la revendication 2, **caractérisé en ce que** la caractéristique de l'état de condensation est un angle de contact moyen des gouttelettes noté $\theta$ et défini par la formule :

$$\theta = 200.\sqrt{\bar{a}\infty}$$

où $\theta$ est exprimé en degrés.

5. Procédé selon la revendication 2, **caractérisé en ce que** la caractéristique de l'état de condensation est une polydispersité des gouttelettes, notée g et définie par :

$$g = 1{,}25.\left(0{,}3 - \frac{\delta}{5}\right)$$

et où

$$\delta = \frac{a_M(1) - \bar{a}_M(1)}{\bar{a}_M(1)}$$

6. Procédé selon la revendication 2, **caractérisé en ce que** la caractéristique de l'état de condensation est le rayon moyen des gouttelettes noté <R> et déterminé pour au moins l'un des premiers minimum local, deuxième minimum local et premier maximum local de la fonction a(t), <R> étant défini par

* <R>=λF à un premier minimum de la fonction a(t)
* <R>=2λF au premier maximum de la fonction a(t)
* <R>=3λF à un deuxième minimum de la fonction a(t)

où λ est la longueur d'onde du faisceau de lumière incident et où F est défini par

$$F = 15 \exp\left(-\frac{\theta}{45}\right)$$

et où $\theta = 200.\sqrt{\bar{a}\infty}$ .

7. Procédé selon la revendication 1, comportant une détermination, au temps t, du volume v(t) de liquide condensé par unité de surface de la cible.

8. Procédé selon les revendications 3, 6 et 7, le volume v(t) étant donné par

$$v(t) = \frac{f(\theta) < R >}{\pi} \varepsilon^2 (t).$$

où f(θ) est un facteur géométrique reliant le volume d'une gouttelette à son rayon.

9. Dispositif pour la caractérisation d'une modification de l'état de condensation de gouttelettes de liquide sur une cible **caractérisé en ce qu'**il comporte :

- des moyens (20, 21, 22, 43) émetteurs de lumière aptes à diriger sur la cible un faisceau (42) de lumière monochromatique,
- un photodétecteur (48) apte à mesurer l'intensité d'un faisceau (46) réfléchi à partir de la cible ou d'un faisceau (47) transmis à travers la cible, et à émettre un signal de mesure,
- une unité (50) de traitement du signal de mesure reliée au photodétecteur et apte à enregistrer une fonction temporelle a(t) définie par

$$a(t) = \frac{I(t)}{I_i}$$

où $I_i$ est l'intensité du faisceau réfléchi, respectivement transmis mesuré en l'absence de gouttelettes sur la cible, l'unité de traitement étant en outre arrangée pour analyser une forme temporelle de la fonction a(t) pour déterminer, à partir de la fonction a(t), au moins une caractéristique géométrique de l'état de condensation des gouttelettes.

10. Dispositif selon la revendication 9, **caractérisé en ce que** l'unité de traitement (50) est apte à calculer la caractéristique de l'état de condensation des gouttelettes à partir d'au moins une donnée choisie parmi :

- une valeur du temps (t) de la fonction a(t),
- une valeur de lissage au temps (t) de la fonction a(t), notée $\bar{a}(t)$,
- une valeur asymptotique de la fonction a(t), notée $\bar{a}\infty$,
- la valeur d'un premier maximum local de la fonction a(t) noté $a_M(1)$,
- une valeur de lissage de la fonction a(t) à un temps (t) correspondant au premier maximum local de la fonction a(t), et notée $\bar{a}_M(1)$.

11. Dispositif selon la revendication 9, **caractérisé en ce qu'**il comporte une sonde thermique (52) pour mesurer la température de la cible, la sonde thermique étant reliée à l'unité de calcul (50) pour déterminer un point de rosée lors de la condensation de gouttelettes sur la cible.

12. Dispositif selon la revendication 9, **caractérisé en ce que** les moyens émetteurs de lumière comportent :

- une source de lumière monochromatique (21),
- une tête de détection (22) pour collimater le faisceau de lumière incident sur la cible (10) et pour recevoir le faisceau réfléchi,
- une liaison (24) par fibre optique reliant la tête de détection (22) à la source de lumière (21) et au photodétecteur (48).

13. Dispositif selon la revendication 12, **caractérisé en ce que** la tête de détection comporte des moyens (54, 56, 70, 72) de régulation de sa température.

14. Dispositif selon la revendication 9, **caractérisé en ce que** les moyens émetteurs de lumière sont aptes à diriger le faisceau de lumière cohérente sur la cible (10) selon une incidence sensiblement normale.

15. Dispositif selon la revendication 9, **caractérisé en ce qu'**il comporte en outre un réflecteur semi-transparent (44) disposé entre la source de lumière monochromatique (21) et la cible (10), le réflecteur semi-transparent étant conçu pour laisser passer le faisceau (42) incident vers la cible et pour dévier un faisceau (46) réfléchi par la cible vers le photodétecteur.

16. Dispositif selon la revendication 9, **caractérisé en ce qu'**il comporte en outre des moyens (64) de régulation de la température de la cible.

**Patentansprüche**

1. Verfahren zur Charakterisierung einer zeitlichen Veränderung des Kondensationszustands der Tröpfchen einer Flüssigkeit auf einer Scheibe (10), **dadurch gekennzeichnet, dass** man einen Lichtstrahl (42) auf die Scheibe (10) richtet, man im Laufe der Zeit (t) eine Intensität I(t) eines von der Scheibe hindurchgelassenen Strahls (47) oder eines von der Scheibe reflektierten Strahls (46) misst und eine Zeitfunktion a(t) aufzeichnet, definiert durch

$$a(t) = I(t)/I_i$$

wo $I_i$ eine Intensität des hindurchgelassenen bzw. reflektierten Strahls ist, gemessen ohne Tröpfchen auf der Scheibe, und man eine zeitliche Form der Funktion a(t) analysiert, um wenigstens eine geometrische Charakteristik des Kondensationszustands zu bestimmen.

2. Verfahren nach Anspruch 1, **dadurch gekennzeichnet, dass** man eine Charakteristik des Kondensationszustands aufgrund wenigstens einer Größe bestimmt, ausgewählt unter:

   - einem Wert der Zeit (t) der Funktion a(t),
   - einem Glättungswert der Funktion a(t) zu der Zeit (t), mit $\bar{a}$ (t) bezeichnet,
   - einem asymptotischen Wert der Funktion a(t), mit $\bar{a}_\infty$ bezeichnet,
   - dem Wert eines ersten lokalen Maximums der Funktion a(t), mit $a_M(1)$ bezeichnet,
   - einem Glättungswert der Funktion a(t) zu einer dem ersten lokalen Maximum der Funktion a(t) entsprechenden Zeit (t), mit $\bar{a}_M(1)$ bezeichnet.

3. Verfahren nach Anspruch 2, **dadurch gekennzeichnet, dass** die Beleuchtung bzw. Bestrahlung mit kohärentem Licht erfolgt, und dadurch, dass die Charakteristik des Kondensationszustands zu der Zeit (t) eine Proportion der durch die Tröpfchen eingenommenen Fläche ist, wobei die genannte Flächenproportion, mit $\varepsilon^2(t)$ bezeichnet, definiert wird durch die Formel:

$$\varepsilon^2(t) = 1 - \sqrt{a(t)}$$

4. Verfahren nach Anspruch 2, **dadurch gekennzeichnet, dass** die Charakteristik im Kondensationszustand ein mittlerer Kontaktwinkel der Tröpfchen ist, mit θ bezeichnet und definiert durch die Formel:

$$\theta = 200.\sqrt{\bar{a}_\infty}$$

wo θ in Grad ausgedrückt wird.

5. Verfahren nach Anspruch 2, **dadurch gekennzeichnet, dass** die Charakteristik des Kondensationszustands eine Polydispersität der Tröpfchen ist, mit g bezeichnet und definiert durch:

$$g = 1,25.(0,3-\delta/5)$$

und wo

$$\delta = \frac{a_M(1) - \bar{a}_M(1)}{\bar{a}_M(1)}$$

6. Verfahren nach Anspruch 2, **dadurch gekennzeichnet, dass** die Charakteristik des Kondensationszustands der mittlere Radius der Tröpfchen ist, mit <R> bezeichnet und bestimmt für wenigstens einen der Werte erstes lokales Minimum, zweites lokales Minimum und erstes lokales Maximum der Funktion a(t), wobei <R> definiert wird durch

   * <R> = λF bei einem ersten Minimum der Funktion a(t)
   * <R> = 2λF beim ersten Maximum der Funktion a(t)
   * <R> = 3λF bei einem zweiten Minimum der Funktion a(t)

   wo λ die Wellenlänge des auftreffenden Lichtstrahls ist und wo F definiert wird durch

$$F = 15\exp\left(-\frac{\theta}{45}\right)$$

   und wo $\theta = 200.\sqrt{\bar{a}_\infty}$ .

7. Verfahren nach Anspruch 1, das zu der Zeit (t) eine Bestimmung des Volumens v(t) der pro Flächen- bzw. Oberflächeneinheit der Scheibe kondensierten Flüssigkeit umfasst.

8. Verfahren nach den Ansprüchen 3, 6 und 7, wobei das Volumen v(t) geliefert wird durch

$$v(t) = \frac{f(\theta) <R>}{\pi}\varepsilon^2(t)$$

   wo f(θ) ein geometrischer Faktor ist, der das Volumen eines Tröpfchens mit seinem Radius verbindet bzw. verknüpft.

9. Vorrichtung zur Charakterisierung einer Veränderung des Kondensationszustands von Flüssigkeitströpfchen auf einer Scheibe, **dadurch gekennzeichnet, dass** sie umfasst:

- Lichtemissionseinrichtungen (20, 21, 22, 43), fähig einen monochromatischen Strahl (42) auf die Scheibe zu richten,
- einen Photodetektor (48), fähig die Intensität eines durch die Scheibe reflektierten Strahls (46) oder eines durch die Scheibe hindurchgelassenen Strahls zu messen und ein Messsignal zu liefern,
- eine Messsignalverarbeitungseinheit (50), verbunden mit dem Photodetektor und fähig, eine zeitliche Funktion a(t) aufzuzeichnen, definiert durch

$$a(t) = I(t)/I_i$$

wo $I_i$ die Intensität des reflektierten bzw. hindurchgelassenen Strahls ist, gemessen ohne Tröpfchen auf der Scheibe, und die Verarbeitungseinheit außerdem eingerichtet ist zur Analyse einer zeitlichen Form der Funktion a(t), um aufgrund der Funktion a(t) wenigstens eine geometrische Charakteristik des Kondensationszustands der Tröpfchen zu bestimmen.

10. Vorrichtung nach Anspruch 9, **dadurch gekennzeichnet, dass** die Verarbeitungseinheit (50) fähig ist, die Charakteristik des Kondensationszustands der Tröpfchen zu berechnen aufgrund wenigstens einer Größe, ausgewählt unter:

- einem Wert der Zeit (t) der Funktion a(t),
- einem Glättungswert der Funktion a(t) zu der Zeit (t), mit $\bar{a}$ (t) bezeichnet,
- einem asymptotischen Wert der Funktion a(t), mit $\bar{a}_\infty$ bezeichnet,
- dem Wert eines ersten lokalen Maximums der Funktion a(t), mit $a_M(1)$ bezeichnet,
- einem Glättungswert der Funktion a(t) zu einer dem ersten lokalen Maximum der Funktion a(t) entsprechenden Zeit (t), mit $\bar{a}_M(1)$ bezeichnet.

11. Vorrichtung nach Anspruch 9, **dadurch gekennzeichnet, dass** sie eine thermische Sonde (52) umfasst, um die Temperatur der Scheibe zu messen, wobei die thermische Sonde mit der Recheneinheit (50) verbunden ist, um während der Kondensation der Tröpfchen auf der Scheibe einen Taupunkt zu bestimmen.

12. Vorrichtung nach Anspruch 9, **dadurch gekennzeichnet, dass** die Lichtemissionseinrichtungen umfassen:

- eine monochromatische Lichtquelle (21),
- einen Detektionskopf (22), um den auf die Scheibe (10) gerichteten Lichtstrahl zu kollimatieren und um den reflektierten Strahl zu empfangen,
- eine Verbindung (24) mittels optischer Faser, die den Detektionskopf (22) mit der Lichtquelle (21) und dem Photodetektor (48) verbindet.

13. Vorrichtung nach Anspruch 12, **dadurch gekennzeichnet, dass** der Detektionskopf Einrichtungen (54, 56, 70, 72) zur Regelung seiner Temperatur umfasst.

14. Vorrichtung nach Anspruch 9, **dadurch gekennzeichnet, dass** die Lichtemissionseinrichtungen fähig sind, den kohärenten Lichtstrahl gemäß einem im Wesentlichen senkrechten Auftreffwinkel auf die Scheibe (10) zu richten.

15. Vorrichtung nach Anspruch 9, **dadurch gekennzeichnet, dass** sie außerdem einen Semitransparenten Reflektor (44) umfasst, angeordnet zwischen der monochromatischen Lichtquelle (21) und der Scheibe (10), wobei dieser semitransparente Reflektor so konzipiert ist, dass er den eintreffenden Strahl (42) durchlässt in Richtung Scheibe und einen durch die Scheibe reflektierten Strahl (46) ablenkt in Richtung Photodetektor.

16. Vorrichtung nach Anspruch 9, **dadurch gekennzeichnet, dass** sie außerdem Einrichtungen (64) zur Regelung der Temperatur der.Scheibe umfasst.

**Claims**

1. Method for characterizing a modification in time of the state of condensation of liquid droplets on a target (10), **characterized by** directing a light beam (42) towards the target (10), measuring in time (t) an intensity I(t) of a beam (47) transmitted through the target or a beam (46) reflected from the target, and recording a time function a(t) which is defined by

$$a(t) = \frac{I(t}{I_i}$$

where $I_i$ is an intensity of the transmission or reflection beam, measured without droplets on the target, and analyzing a time form of function a(t) for determining at least one geometrical characteristic of the state of condensation.

2. Method according to claim 1, **characterized in that** a characteristic of the state of condensation is determined from at least one datum chosen from:

- a time value (t) of function a(t),
- a smoothing value at time (t) of function a(t), labelled as $\bar{a}$(t,
- an asymptotic value of function a(t), labelled as $\bar{a}\infty$,
- the value of a first local maximum of function a (t) labelled as $a_M(1)$,
- a smoothing value of function a(t) at a time (t) corresponding to the first local maximum of function a(t), and labelled $\bar{a}_M(1)$.

3. Method according to claim 2, **characterized in that** lighting is achieved in coherent light and **in that** the characteristic of the state of condensation is a proportion at time (t) of the surface filled by the droplets, said surface proportion, labelled as $\varepsilon^2$(t), being defined by the formula:

$$\varepsilon^2(t) = 1 - \sqrt{\bar{a}(t)}$$

4. Method according to claim 2, **characterized in that** the characteristic of the state of condensation is an average contact angle of the droplets, labelled as θ and defined by the formula:

$$\theta = 200.\sqrt{\bar{a}\infty}$$

where θ is expressed in degrees.

5. Method according to claim 2, **characterized in that** the characteristic of the state of condensation is a polydispersivity of the droplets, labelled as g and defined by:

$$g = 1.25.\left(0.3 - \frac{\delta}{5}\right)$$

and where

$$\delta = \frac{a_M(1) - \bar{a}_M(1)}{\bar{a}_M(1)}$$

6. Method according to claim 2, **characterized in that** the characteristic of the state of condensation is the average droplet radius, labelled as <R> and determined for at least one of the first local minimum, the second local minimum and the first local maximum of function a(t), <R> being defined by

* <R> = λF at a first minimum of function a(t)

* <R> = 2λF at the first maximum of function a(t)
* <R> = 3λF at a second minimum of function a(t)

where λ is the wavelength of the incident light beam, and where F is defined by

$$F = 15 \exp\left(-\frac{\theta}{45}\right)$$

and where $\theta = 200.\sqrt{\bar{a}\infty}$.

7. Method according to claim 1, comprising a determination, at time t, of the condensed liquid volume v (t) per unit area of the target.

8. Method according to claims 3, 6 and 7, volume v(t) being given by

$$v(t) = \frac{f(\theta) <R>}{\pi} \varepsilon^2(t.$$

where f(θ) is a geometric factor linking the volume of a droplet with its radius.

9. Apparatus for characterizing a modification of the state of condensation of liquid droplets on a target, **characterized in that** it comprises:

- a light transmitting means (20, 21, 22, 43) capable of directing a monochromatic light beam (42) towards the target,
- a photodetector (48) capable of measuring the intensity of a beam (46) reflected from the target or a beam (47) transmitted through the target, and of transmitting a measuring signal,
- a measuring signal processing unit (50) connected to the photodetector and capable of recording a time function a(t) defined by

$$a(t) = \frac{I(t}{I_i}$$

where $I_i$ is the intensity of the reflected beam, respectively transmitted, measured without droplets being on the target, the processing unit being arranged for analyzing a time form of function a(t) for determining from function a(t) at least one geometrical characteristic of the state of condensation of the droplets.

10. Apparatus according to claim 9, **characterized in that** the processing unit (50) is capable of calculating the characteristic of the state of condensation of the droplets from at least one datum chosen from:

- a time value (t) of function a(t),
- a smoothing value at time (t) of function a(t), labelled as $\bar{a}$(t,
- an asymptotic value of function a(t), labelled as $\bar{a}\infty$,
- the value of a first local maximum of function a (t) labelled as $a_M(1)$,
- a smoothing value of function a(t) at a time (t) corresponding to the first local maximum of function a(t), and labelled as $\bar{a}_M$ (1.

11. Apparatus according to claim 9, **characterized in that** it comprises a heat sensor (52) for measuring the target's temperature, the heat sensor being connected to the computing unit (50) for determining a dew point while the droplets are condensing on the target.

12. Apparatus according to claim 9, **characterized in that** the light transmitting means comprises:

   - a monochromatic light source (21),
   - a detector head (22) for collimating the incident light beam on the target (10) and receiving the reflected beam,
   - a fibre optic link (24) connecting the detector head (22) to light source (21) and photodetector (48).

13. Apparatus according to claim 12, **characterized in that** the detector head comprises a means (54, 56, 70, 72) for controlling its temperature.

14. Apparatus according to claim 9, **characterized in that** the light transmitting means is capable of directing the coherent light beam towards the target (10) according to a substantially normal incidence.

15. Apparatus according to claim 9, **characterized in that** it further comprises a semitransparent reflector (44) arranged between the monochromatic light source (21) and target (10), the semitransparent reflector being designed for letting the incident beam (42) through to the target and deflecting a beam (46) reflected by the target towards the photodetector.

16. Apparatus according to claim 9, **characterized in that** it further comprises a means (64) for controlling the target's temperature.

FIG. 1

FIG. 2

FIG. 3

FIG. 4

FIG. 5

FIG. 6

FIG. 7